# EUROPEAN PATENT APPLICATION

(11) **EP 3 176 425 A1**
(43) Date of publication of application: **07.06.2017**
(21) Application number: 15197266.8
(22) Date of filing: 01.12.2015
(51) Int. Cl.: F03D 1/06

(54) **ASSEMBLY OF AEROFOIL-SHAPED BODY AND NOISE REDUCING SERRATION AND WIND TURBINE PROVIDED THEREWITH**

(71) Applicant: Stichting Nationaal Lucht- en Ruimtevaart Laboratorium, 1059 CM Amsterdam (NL)
(72) Inventor: TUINSTRA, Marthijn, 8332 KW Steenwijk (NL)
(74) Representative: De Vries & Metman

(57) **Abstract**

An assembly is provided of, firstly, an aerofoil-shaped body, such as a wing of an airplane or a rotor blade of a wind turbine, having a trailing edge and, secondly, a noise reducing serration extending along at least part of said trailing edge. The serration comprises a base plate defining a first edge connected to the aerofoil-shaped body near to said trailing edge and a second edge having attached thereto a number of teeth defining tips facing away from the base plate. The base plate is located behind the trailing edge and is separated therefrom by a gap wherein the connection between the base plate and aerofoil-shaped body is defined by at least one tape-like member made of a material which allows the tape-like member to bend, stretch and buckle. The serration in such a manner is stiff against bending but weak against torsion that in a range of expected operational loads the serration is not able to bend substantially, whereas in said range of expected operational loads the base plate is able to twist.

## Description

The invention in a first aspect relates to an assembly of, firstly, an aerofoil-shaped body, such as a wing of an airplane or a rotor blade of a wind turbine, having a trailing edge and, secondly, a noise reducing serration extending along at least part of said trailing edge, which serration comprises a base plate defining a first edge connected to the aerofoil-shaped body near to said trailing edge and a second edge having attached thereto a number of teeth defining tips facing away from the base plate.

Such serrations are trailing edge mounted devices that provide for a reduction of trailing edge noise of the aerofoil-shaped body when moving relative to the surrounding air. When correctly designed, such serrations can yield noise reductions up to 6dB. However, such serrations also can create spurious noise due to a cross flow between the teeth of the serration. Even in optimal conditions serrations are often reported to generate high frequency noise. Considering the fact that the flow over an aerofoil-shaped body (such as, for example, a rotor blade of a wind turbine) changes significantly under operational circumstances (for example due to varying wind speed and direction, varying twist of the aerofoil-shaped body) great care has to be taken when instrumenting an aerofoil-shaped body with such a serration. But even then the results most likely are suboptimal at best.

US patent 8,523,515 shows a rotor blade assembly for a wind turbine comprising serrations with a base plate which is directly attached to the rotor blade. Each of the teeth of the serrations is individually set to a precalculated fixed angle orientation based on a local flow streamline. Because such an angle is based on (designed for) a single operational reference condition (e.g. wind velocity, blade pitch), for off-design conditions the serration still will perform sub-optimally and even might cause additional noise.

EP-B-1.314.885 describes the provision of a serration or serrated panel directly at a trailing edge of a wind turbine rotor blade. The angle of the serrated panel may change passively in response to the speed and angle of air flow at the trailing edge of the rotor blade due to flexing of the serration or serrated panel. Thus the serration or serrated panel will bend for assuming a desired position.

It is an object of the present invention to provide an improved assembly of the type referred to above for reducing noise at a trailing edge of an aerofoil-shaped body.

In accordance with the present invention such an assembly is characterized in that the base plate is located behind the trailing edge and is separated therefrom by a gap and wherein the connection between the base plate and aerofoil-shaped body is defined by at least one tape-like member made of a material which allows the tape-like member to bend, stretch and buckle and wherein the serration in such a manner is stiff against bending but weak against torsion that in a range of expected operational loads the serration is not able to bend substantially but wherein, in said range of expected operational loads, the base plate is able to twist.

The features of such an assembly offer a number of advantages over the state of the art which yield an improved noise reduction over the entire range of operational conditions. Because of the combination of features provided, at one hand, by the at least one tape-like member (for example a ribbon which may easily bend, stretch and buckle and which allows to create said gap) and, at the other hand, by the serration (which substantially resists bending, but of which the base plate easily twists), the serration has the capability to adopt at every lengthwise position (lengthwise meaning in a direction as seen in parallel to the trailing edge of the aerofoil-shaped body) a position in accordance with the local airflow. This means that (each group of) teeth can align itself independently in accordance with the local airflow. For achieving such a result the at least one tape-like member may deform (bend and/or stretch and/or buckle) whereas the base plate of the serration may twist.

In comparison with the previously mentioned state of the art US patent 8,523,515 the present invention provides a serration of which the position not only is optimised for a single operational reference condition but for a range of operational conditions.

Compared to the previously mentioned state of the art document EP-B-1.314.885 the serration according to the invention, firstly, may change its angle at different lengthwise positions to a different extent (among others because of the twisting of the base plate and because of the provision of the at least one tape-like member) and not everywhere to the same extent (as will be the case in this state of the art assembly, mainly because the serration is directly attached to the trailing edge without the use of a tape-like member that creates a gap), whereas, secondly, flow forces acting on the teeth of the serration are not used for bending the serration (as in this state of the art) but now in an optimal manner are transferred to and will act on the at least one tape-like member (which acts like a hinge mechanism) via a large moment arm (because the serration itself resists bending), thus improving the effect of the flow forces (meaning, basically, that a favourable adjustment of the orientation of the serration already will occur at smaller flow forces). Moreover, in accordance with the present invention the serration now is located behind the trailing edge (opposed to on top or below it as in this state of the art) such that any aerodynamic disturbance will be minimised. Finally, the serration in accordance with the present invention defines a 'one-solution-fits-all' concept because a single design is applicable to a large range of, for example, wind turbine rotor blade configurations.

Tests conducted with the new assembly have shown that consistent noise reductions are obtained over a large range of operational (flow) conditions without causing detrimental high frequency noise.

In one embodiment of the assembly the tape-like member mainly is made of polyethylene or a material with similar properties as polyethylene. Such a material should be able to, firstly, deform for offering flexibility to the tape-like member and to, secondly, dampen excitations.

For example the tape-like member, in one embodiment, may have an elongation in a range of 150%-450%, preferably in a range of 400%-450% and more preferably of 450% according to the AFERA 5004 Standard.

It is conceivable that the tape-like member is attached to the aerofoil-shaped body by an adhesive, such as for example an acrylic pressure sensitive and preferably UV-resistant adhesive. The tape-like member as a result yields a hinge mechanism which will stay intact for a prolonged period of time and which may be replaced at fixed maintenance intervals.

In one embodiment of the assembly in which the aerofoil-shaped body defines opposite pressure and suction sides, the base plate is connected to the trailing edge by two tape-like members attached, respectively, to opposite sides of the base member and corresponding ones of the pressure and suction sides of the aerofoil shaped body. The provision of two tape-like members results in effectively closing the gap and thus avoiding any undesirable noises. However, the gap still provides room for allowing the tape-like members to deform.

In another embodiment of the assembly according to the present invention the trailing edge has a thickness tₜₑ and the tape-like member has a thickness t_{hinge} and the ratio t_{hinge}/tₜₑ is in a range of 0,2-0,6, preferably in a range of 0,45-0,55 and more preferably is 0,5. The tape-like member should not be too thin (which could lead to uncontrolled movements of the serration), but also not too thick (which would limit its flexibility).

In one embodiment of the assembly the trailing edge has a thickness tₜₑ and the serration has a thickness tₛₑᵣ and the ratio tₛₑᵣ/tₜₑ is in a range of 0,7-1,0, preferably in a range of 0,7-0,8 and more preferably in a range of 0,72-0,76. Basically it is advantageous to avoid that the serration is thicker than the trailing edge.

In yet another embodiment of the assembly the gap has a width t_{gap} and the ratio t_{gap}/tₜₑ is in a range of 2-6, preferably in a range of 4,5-5,5 and more preferably in a range of 4,9-4,95. Too large a gap may cause uncontrolled movements (flapping) of the serration, and too small a gap can limit the flexibility (the ability of the serration to assume an optimal position).

In one embodiment the distance between the first and second edges of the base plate is h and the teeth have a length L from the junction with the second edge of the base plate towards a tip and the ratio h/L is in a range of 0,195-0,205 and preferably is 0,2. Keeping h small will result in a base plate that twists easily; however h should be large enough to create a surface to be used for connecting the serration to the aerofoil-shaped body (using the at least one tape-like member).

Further it is possible that the teeth have a length L from the junction with the second edge of the base plate towards a tip and a width W at said junction, wherein the ratio L/W is in a range of 1-4, preferably in a range of 3-4 and more preferably is 4. Although narrow teeth (L/W large) will perform better, too narrow teeth will become sensitive for detrimental cross flows.

In one embodiment of the assembly according to the present invention the teeth have a length L from the junction with the second edge of the base plate towards a tip and the aerofoil-shaped body between its trailing edge and an opposite leading edge defines a chord with length c, the ratio L/c is in a range of 0,1-0,3, preferably in a range of 0,15-0,25 and more preferably is 0,2. When the serration is too long, it may deform (especially bend) and when it is too short it will not sufficiently reduce noise.

The serration may be made of any appropriate material offering the desired (or required) characteristics. In one embodiment the serration is made of sheet metal. However, other materials, such as (fibre reinforced) polymers are conceivable too (which have the advantage to be less prone to be struck by lightning).

In a second aspect the present invention relates to a wind turbine comprising a rotor with a number of rotor blades each being part of an assembly according to any of the previous claims in which each rotor blade defines the aerofoil-shaped body of such an assembly.

Hereinafter the invention will be elucidated while referring to the drawing, in which
Figure 1 shows a schematic frontal view of a wind turbine according to the invention;
Figure 2 on a larger scale shows a cross section through a rotor blade according to II in figure 1;
Figure 3 on a still larger scale illustrates a detail according to III in figure 2, and
Figure 4 shows a view according to IV in figure 3.

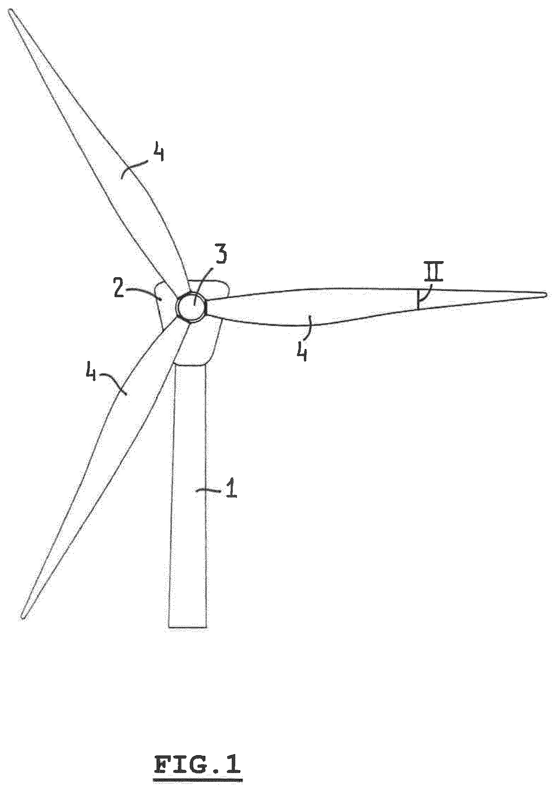

Referring firstly to figure 1 a wind turbine comprises a column 1 (which may be land or sea based) supporting at its top a nacelle 2. In the nacelle 2 a rotor 3 is mounted for a rotation, which motor is provided with rotor blades 4.

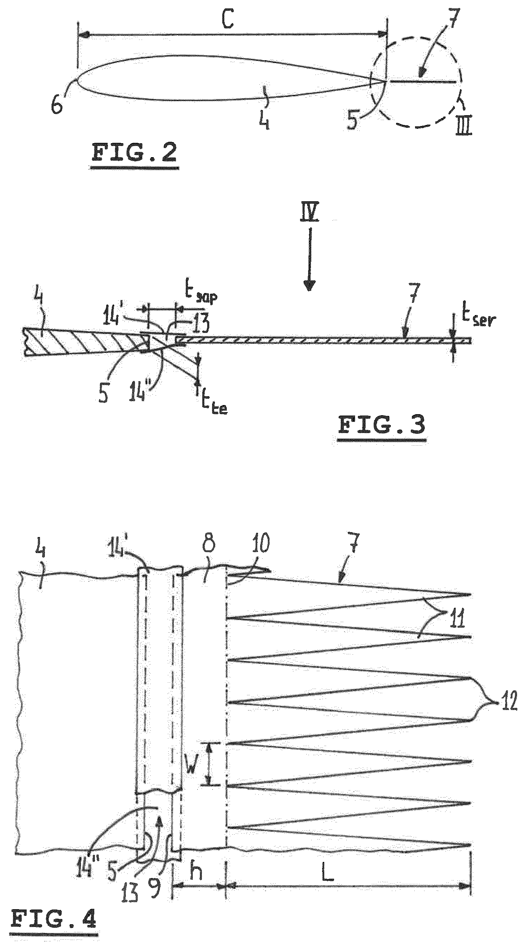

Figure 2 shows a cross section through a rotor blade 4 in accordance with line II in figure 2. Each rotor blade 4 basically defines (and acts as) an aerofoil-shaped body (and as such the invention likewise will be applicable to other types of aerofoil-shaped bodies, such as for example wings of airplanes). The rotor blade 4 has a trailing edge 5 and a leading edge 6 defining there between a chord with length c.

Referring to figures 2-4 it appears that a noise reducing serration 7 extends along at least part of said trailing edge 5. This serration 7 comprises a base plate 8 defining a first edge 9 facing the rotor blade 4 and connected thereto (in a manner to be described later) near to the trailing edge 5. The base plate further comprises a second edge 10 having attached thereto a number of (in this embodiment triangular) teeth 11 defining tips 12 facing away from the base plate 8.

It is noted that the base plate 8 and teeth 11 may be manufactured as separate parts which afterwards are interconnected in any suitable manner, but as an alternative the base plate 8 and teeth 11 may be made of a single base part as an integral unit (for example being cut out of a single base part, such as a sheet metal).

The base plate 8 is located behind the trailing edge 5 and is separated therefrom by a gap 13. The connection between the base plate 8 and rotor blade 4 is defined by at least one tape-like member, in the present embodiment an upper tape-like member 14' and a lower tape-like member 14" each made of a material which allows the tape-like members to bend, stretch and buckle, such that the base plate 8 is connected to the trailing edge 5 by said two tape-like members which are attached, respectively, to opposite sides of the base member 5 and corresponding ones of opposite pressure and suction sides of the rotor blade 4. During such a deformation the tape-like members may partly enter the gap 13.

The tape-like member may, for example, be a ribbon made of polyethylene or a material with similar properties as polyethylene (having for example an elongation in a range of 150%-450%, preferably in a range of 400%-450% and more preferably of 450% according to the AFERA 5004 Standard).

The serration 7 (thus the combination of base plate 8 and teeth 11) in such a manner is stiff against bending but weak against torsion that in a range of expected operational loads the serration 7 is not able to bend substantially, whereas however in said range of expected operational loads the base plate is able to twist.

As a result the serration 7 has the capability to adopt at every lengthwise position (lengthwise meaning in a direction as seen in parallel to the trailing edge 5 of the rotor blade 4) a position in accordance with a local airflow. This means that (each group of) teeth 11 can align itself independently in accordance with the local airflow. For achieving such a result the tape-like members 14' and 14" may deform (bend and/or stretch and/or buckle) whereas the base plate 8 of the serration 7 may twist. The serration 7 (base plate 8 and teeth 11) however will not bend substantially, as seen in a direction perpendicular to the trailing edge 5).

The tape-like members 14'and 14" may be attached to the rotor blade 4 by an adhesive, such as for example an acrylic pressure sensitive and preferably UV-resistant adhesive. However, a mechanical manner of attachment is conceivable too, for example in the trailing edge.

The trailing edge 5 has a thickness tₜₑ and the tape-like members 14' and 14" have a thickness t_{hinge} wherein the ratio t_{hinge}/tₜₑ is in a range of 0,2-0,6, preferably in a range of 0,45-0,55 and more preferably is 0,5.

The serration 7 has a thickness tₛₑᵣ wherein the ratio tₛₑᵣ/tₜₑ is in a range of 0,7-1,0, preferably in a range of 0,7-0,8 and more preferably in a range of 0,72-0,76.

The gap 13 has a width t_{gap} wherein the ratio t_{gap}/tₜₑ is in a range of 2-6, preferably in a range of 4, 5-5,5 and more preferably in a range of 4,9-4,95.

The distance between the first edge 9 and second edge 10 of the base plate 8 is h and the teeth 11 have a length L from the junction with the second edge 10 (as represented by a chain line in figure 4) of the base plate 8 towards a tip 11 and the ratio h/L is in a range of 0,195-0,205 and preferably is 0,2.

Further the teeth 11 a width W at said junction, wherein the ratio L/W is in a range of 1-4, preferably in a range of 3-4 and more preferably is 4.

As stated before, the rotor blade 4 between its trailing edge 5 and the opposite leading edge 6 defines a chord with length c, wherein the ratio L/c is in a range of 0,1-0,3, preferably in a range of 0,15-0,25 and more preferably is 0,2.

In a specific embodiment with a chord c of 0,15m, tₜₑ was 0,000405m, tₛₑᵣ was 0,003m, t_{gap} was 0,002m, h was 0,006m, L was 0,03m, W was 0,0075m and t_{hinge} (which may be the combined width of a tape-like member and adhesive, of which the latter hardly contributes to the combined width) was 0,00015m.

The invention is not limited to the embodiments described before which may be varied widely within the scope of the invention as defined by the appending claims.

## Claims

1. Assembly of, firstly, an aerofoil-shaped body, such as a wing of an airplane or a rotor blade of a wind turbine, having a trailing edge and, secondly, a noise reducing serration extending along at least part of said trailing edge, which serration comprises a base plate defining a first edge connected to the aerofoil-shaped body near to said trailing edge and a second edge having attached thereto a number of teeth defining tips facing away from the base plate, **characterized in that** the base plate is located behind the trailing edge and is separated therefrom by a gap and wherein the connection between the base plate and aerofoil-shaped body is defined by at least one tape-like member made of a material which allows the tape-like member to bend, stretch and buckle and wherein the serration in such a manner is stiff against bending but weak against torsion that in a range of expected operational loads the serration is not able to bend substantially, whereas in said range of expected operational loads the base plate is able to twist.

2. Assembly according to claim 1, wherein the tape-like member mainly is made of polyethylene or a material with similar properties as polyethylene.

3. Assembly according to any of the previous claims, wherein the tape-like member has an elongation in a range of 150%-450%, preferably in a range of 400%-450% and more preferably of 450% according to the AFERA 5004 Standard.

4. Assembly according to any of the previous claims, wherein the tape-like member is attached to the aerofoil-shaped body by an adhesive, such as for example an acrylic pressure sensitive and preferably UV-resistant adhesive.

5. Assembly according to any of the previous claims, wherein the aerofoil-shaped body defines opposite pressure and suction sides and wherein the base plate is connected to the trailing edge by two tape-like members attached, respectively, to opposite sides of the base member and corresponding ones of the pressure and suction sides of the aerofoil shaped body.

6. Assembly according to any of the previous claims, wherein the trailing edge has a thickness tₜₑ and the tape-like member has a thickness t_{hinge} and wherein the ratio t_{hinge}/tₜₑ is in a range of 0,2-0,6, preferably in a range of 0,45-0,55 and more preferably is 0,5.

7. Assembly according to any of the previous claims, wherein the trailing edge has a thickness tₜₑ and the serration has a thickness tₛₑᵣ and wherein the ratio tₛₑᵣ/tₜₑ is in a range of 0,7-1,0, preferably in a range of 0,7-0,8 and more preferably in a range of 0,72-0,76.

8. Assembly according to any of the previous claims, wherein the gap has a width t_{gap} and wherein the ratio t_{gap}/tₜₑ is in a range of 2-6, preferably in a range of 4,5-5,5 and more preferably in a range of 4,9-4,95.

9. Assembly according to any of the previous claims, wherein the distance between the first and second edges of the base plate is h and wherein the teeth have a length L from the junction with the second edge of the base plate towards a tip and wherein the ratio h/L is in a range of 0,195-0,205 and preferably is 0,2.

10. Assembly according to any of the previous claims, wherein the teeth have a length L from the junction with the second edge of the base plate towards a tip and a width W at said junction, wherein the ratio L/W is in a range of 1-4, preferably in a range of 3-4 and more preferably is 4.

11. Assembly according to any of the previous claims, wherein the teeth have a length L from the junction with the second edge of the base plate towards a tip and wherein the aerofoil-shaped body between its trailing edge and an opposite leading edge defines a chord with length c, wherein the ratio L/c is in a range of 0,1-0,3, preferably in a range of 0,15-0,25 and more preferably is 0,2.

12. Assembly according to any of the previous claims, wherein the serration is made of sheet metal.

13. Assembly according to any of the claims 1-11, wherein the serration is made of a (fibre reinforced) polymer.

14. Wind turbine comprising a rotor with a number of rotor blades each being part of an assembly according to any of the previous claims in which each rotor blade defines the aerofoil-shaped body of such an assembly.
